# EUROPÄISCHE PATENTSCHRIFT

(11) **EP 1 734 683 B1**
(45) Veröffentlichungstag und Bekanntmachung des Hinweises auf die Patenterteilung: **22.12.2010**
(21) Anmeldenummer: 06012222.3
(22) Anmeldetag: 14.06.2006
(51) Int. Cl.: H04L 1/18, H04L 1/00, G06F 13/00

(54) **Verfahren zur Übertragung von Datentelegrammen über eine Funkstrecke**
Method for transmission of data telegrams via a radio link
Procédé de transmission de télégrammes de données via une liaison radio

(30) Priorität: 14.06.2005 DE 102005027579; 22.12.2005 DE 102005061380; 10.04.2006 DE 102006017094
(43) Veröffentlichungstag der Anmeldung: 20.12.2006
(73) Patentinhaber: Elan Schaltelemente GmbH & Co. KG, 35435 Wettenberg (DE)
(72) Erfinder: Schlotzhauer, Björn, 35041 Marburg (DE); Koch, Jörg, 35452 Heuchelheim (DE); Niehaus, Michael, 61197 Florstadt (DE)
(74) Vertreter: Stoffregen, Hans-Herbert

(56) Entgegenhaltungen:
- EP-A- 1 453 334
- DE-A1- 10 038 923
- DE-A1- 10 250 867

## Beschreibung

Die Erfindung bezieht sich auf ein Verfahren zur Übertragung von Datentelegrammen über eine Funkstrecke, wobei die Datentelegramme mehrere Telegramm-Teile umfassen, wobei zumindest eines der Telegramm-Teile sowohl nicht-invertiert als auch invertiert gesendet wird.

Ein Verfahren der eingangs genannten Art ist in der DE-A-100 38 923 beschrieben. Dabei handelt es sich um ein Verfahren zur einseitig gerichteten und störungssicheren Übertragung von digitalen Daten über Funkwellen, bei welchem die aus Datenpaketen, welche jeweils eine definierte Anzahl von Bytes aufweisen, und wenigstens einem Synchronisationspaket zusammengesetzten Daten von einem Sender zu einem Empfänger gesendet werden. Bei diesem Verfahren ist vorgesehen, dass jedes Byte als aus Flag Bits als Startbits, aus die Information darstellenden Informationsbits und aus die Nummer des jeweiligen Bytes kodierenden und die Paritätsinformation tragenden Identifikationsbits bestehend übertragen wird und dass in jedem zweiten Byte die Flag Bits und die Informationsbits invertiert werden.

Ein weiteres Verfahren und eine Vorrichtung zur Erfassung, Übertragung und Auswertung sicherheitsgerichteter Signale ist in der EP-A-1 453 334 beschrieben. Die Signale werden von mindestens einer einen Sender aufweisenden Mobilstation über eine Funkstrecke an eine einen Empfänger aufweisende Basisstation gesendet. Durch Unterbrechen der Stromversorgung der Mobilstation wird die Aussendung von Signalen unterbrochen, wobei das Ausbleiben von Signalen durch die Basisstation mittels einer Zeiterwartungshaltung überwacht wird und wobei die über die Funkstrecke empfangenen Signale zweikanalig ausgewertet werden und bei Ausbleiben von Signalen innerhalb eines definierten Zeitfensters sicherheitsgerichtet Ausgänge in einen sicheren Zustand geschaltet werden.

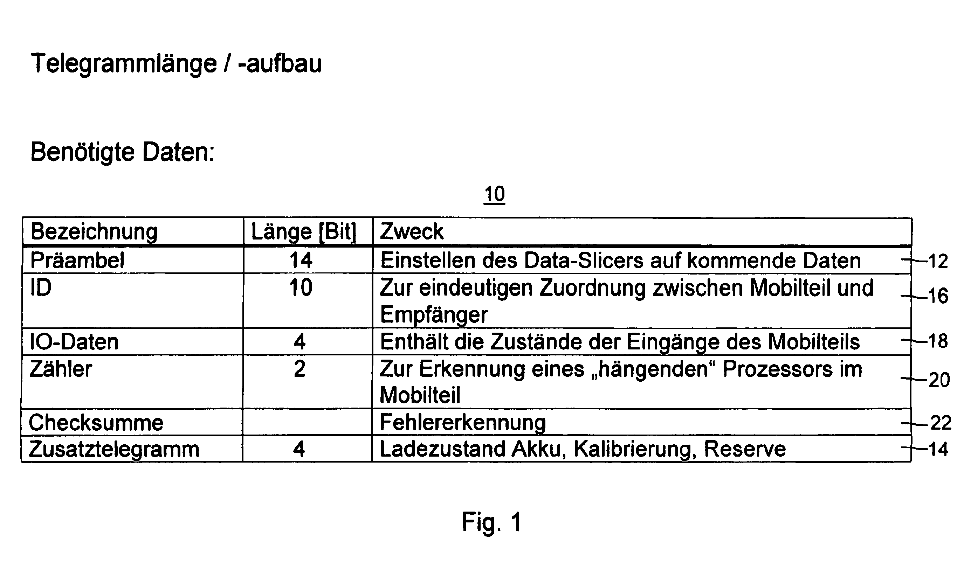

Allgemein ist ein Datentelegramm im Rahmen einer seriellen Funk-Datenübertragung gemäß Fig. 1 beispielsweise derart aufgebaut, dass dieses eine Präambel, ein Syncwort, Daten und eine Daten-Prüfsumme umfasst. Dabei dient die Präambel der Abstimmung des Empfängers auf den folgenden Datenstrom. Das folgende Syncwort markiert den Beginn der auszuwertenden Daten, wobei die Daten die eigentlich zu übermittelnden Informationen einschließlich Sender-Identifikation umfassen. Die Daten-Prüfsumme wird über die Daten gebildet und dient zur Feststellung der Korrektheit der übertragenden Daten.

Physikalisch ist es dabei nicht zu vermeiden; dass in solchen Telegrammen übertragene Bits verfälscht werden und solche Verfälschungen Einfluss auf die Datenqualität nehmen.

Beim Betrieb von funkbasierten Systemen, insbesondere dann, wenn sie sogenannten Duty-Cycle-Regelungen unterworfen sind, muss ein Datentelegramm möglichst kurz sein, damit innerhalb einer Zeitspanne möglichst viele Telegramme übertragen werden können. Andererseits können die Datentelegramme nicht beliebig kurz gehalten werden, da dies die Datenintegrität (Datenqualität) und damit die Verfügbarkeit bzw. Zuverlässigkeit einer Funkstrecke negativ berühren würde.

Negativ berührt wird die Datenqualität funkbasierter Datentelegramme zum einen durch die bekannten physikalischen Einflüsse der Hochfrequenztechnik, wie Interferenzen, Absorptionen, Beugungen, Reflexionen etc., zum anderen aber auch durch Toleranzen der beteiligten Hardware in Sendern und Empfängern. So stellt z. B. bei digitalen Funkstrecken die Anhäufung von Null-Bits und 1-Bits (0en, 1en) in Datentelegrammen je nach gewähltem Codierverfahren für den Empfänger ein Problem dar.

Ein weiteres Problem in diesem Zusammenhang stellt sich, wenn über die gesamten Nutzdaten des Telegramms zusätzlich eine Prüfsumme bzw. Checksumme gebildet werden muss. Im Falle einer Verfälschung wäre der Empfänger gezwungen, das gesamte Datentelegramm zu verwerfen, auch wenn die Verfälschung nur in einem Teil des Telegramms stattgefunden hat, die für die Aufrechterhaltung des Betriebs des an den Empfängern angeschlossenen Geräts nicht wichtig ist. Dadurch verringert sich die Verfügbarkeit der Funkstrecke.

Davon ausgehend liegt der Erfindung die Aufgabe zu Grunde, ein Verfahren der oben genannten Art dahingehend weiterzubilden, dass die Verfügbarkeit einer Funkstrecke optimiert und die Informationsextraktion bei einer gestörten Funkdatenübertragung verbessert wird.

Die Aufgabe wird durch die Merkmale des Anspruchs 1 gelöst.

Gemäß einer bevorzugten Verfahrensweise erfolgt eine Aufteilung des Datentelegramms in einen ID-Teil, einen Daten-Teil und vorzugsweise einen Zähler-Teil mit jeweils getrenntem Prüfsummen-Teil. Dadurch kann der Empfänger weiterhin durch die ID angesprochen werden, auch wenn im Daten-Teil oder in dem Prüfsummen-Teil der Daten Verfälschungen auftreten.

Gemäß einer weiteren bevorzugten Verfahrensweise ist vorgesehen, dass der ID-Teil zweifach übertragen wird, wobei abwechselnd je ein Bit normal und ein Bit invertiert gesendet wird. Dadurch ergibt sich eine Wiederholung der ID, die die Wahrscheinlichkeit verringert, dass die ID durch Bit-Fehler nicht mehr korrekt empfangen werden kann.

Gemäß einer weiteren bevorzugten Verfahrensweise ist vorgesehen, dass separate Prüfsummen-Teile für den ID-Teil und den Daten-Teil übertragen werden. Hierbei ist vorgesehen, dass der Prüfsummen-Teil der ID zumindest zweifach übertragen wird, wobei abwechselnd ein Bit normal und ein Bit invertiert gesendet werden.

Schließlich ist des Weiteren vorgesehen, dass der Daten-Teil und der Zähler-Teil zumindest zweifach übertragen werden, wobei abwechselnd ein Bit normal und ein Bit invertiert gesendet werden. Der Prüfsummen-Teil der Daten-/Zähler-Teile wird jedoch nur einfach übertragen, da nachfolgende Daten (Zusatztelegramm) für die Verfügbarkeit nicht relevant sind.

Es ist vorgesehen, dass die Telegramm-Daten nach dem NRZ (Non Return To Zero)-Codierverfahren codiert werden. Durch das NRZ-Verfahren und die oben genannten Maßnahmen wird ein Manchester-ähnliches Datentelegramm mit einer Wiederholung des Dateninhalts und gleichzeitiger Aufteilung der Daten in Teile gestaltet, die für die Verfügbarkeit wichtig bzw. weniger wichtig sind.

Durch obige Maßnahmen lassen sich prinzipiell Datenverfälschungen im hinteren Teil durch die Redundanz aufdecken und die korrekten Teile weiterhin verwenden. Problematisch bleibt aber der vordere Teil mit Präambel und Syncwort bzw. ID. Eine Störung würde den Beginn der Datenübertragung verschleiern und damit eine "normale" Auswertung der Nutzdaten verhindern.

Gemäß einer weiteren Verfahrensvariante ist vorgesehen, dass anstelle einer Orientierung auf exakte Positionen im Datentelegramm eine Orientierung am Bit-Muster der Senderidentifikation (Sender-ID) oder Sender-ID-Prüfsumme, die dem Empfänger bekannt ist, erfolgt. Sobald ein solches Bit-Muster aufgefunden wird, kann - ausgehend von diesem relativen Startpunkt - das gesamte Telegramm mit bekannter Länge und mehrfacher Wiederholung durch Verifizierung aller Prüfsummen bezogen auf die vorliegenden Datenabschnitte bewertet werden. Man verlässt sich dabei nicht auf die erste Fundstelle des Bit-Musters, sondern sucht gleich nach möglichen weiteren Vorkommen. Anschließend sucht man sich das Vorkommen mit der höchsten Anzahl korrekter Daten/Prüfsummen-Pakete und verwendet dessen Daten weiter.

Eine Mindestanzahl von korrekten Daten/Prüfsummen-Paketen kann je nach Anwendungsfall vorgegeben werden. Ein Unterschreiten bedeutet keine direkte Auswertbarkeit des Telegramms.

Um bei stärkster Störung der Übertragung noch eine Verfügbarkeit des Telegramms zu realisieren, d. h. zu der Mindest-Anzahl der benötigten korrekten Daten/Prüfsummen-Pakete zu gelangen, können die verfälschten Daten an den Positionen mit ansonsten korrekten Prüfsummen (also identisch mit Prüfsummen der an sich korrekten Daten/Prüfsummen-Paare) unter Einschränkungen zurückgenommen werden:

Weichen die verfälschten Daten von denen als korrekt erkannten Daten mit nur einem Bit ab, wobei die Prüfsummen aber identisch sind, lässt sich aufgrund der Hamming-Distanz schließen, dass dieses unterschiedliche Bit vor der Übertragung identisch gewesen sein muss, da ansonsten auch die Prüfsumme verändert wäre. Daher kann dieses Bit aus der Prüfsumme rekonstruiert werden. Dabei ist ein geeigneter Prüfsummen-Algorithmus zu verwenden, beispielsweise eine Variante des Längs-/Quer-Paritätsverfahrens, mit dem sich die Position des verfälschten Bits exakt bestimmen und so auch gezielt korrigieren lässt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden Ausführungsbeispielen.

Es zeigen:
- Fig. 1: einen Telegrammaufbau nach dem Stand der Technik
- Fig. 2: Beispiel einer Übertragung eines Telegramm-Teils nach dem erfindungsgemäßen Verfahren und
- Fig. 3: einen erfindungsgemäßen Telegrammaufbau.

Fig. 1 zeigt einen üblichen Telegrammaufbau, wie dieser nach dem Stand der Technik zur Übertragung sicherheitstechnisch relevanter Daten verwendet wird. In dem Telegramm-Aufbau werden funktionelle Telegrammdaten wie Präambel-Teil 12 oder Zusatztelegramm-Teil 14 und sicherheitstechnisch relevante Telegrammdaten wie ID-Teil 16, IO-Daten-Teil 18 und Zähler-Teil 20 sowie Prüfsummen- bzw. Checksummen-Teil 22 unterschieden.

Der Präambel-Teil 12 dient zum Erstellen eines Data-Slicers auf kommende Daten, d. h. zur Abstimmung des Empfängers mit dem nachfolgenden Datenstrom. Der ID-Teil 16 dient zur eindeutigen Zuordnung zwischen Mobilteil und Empfänger. Ein Ausbleiben über eine gewisse Zeitdauer würde zur Abschaltung des an den Empfänger angeschlossenen Geräts führen. In dem IO-Daten-Teil 18 werden Zustände der Eingänge des Mobilteils übertragen. Der Zähler-Teil 20 dient zur Erkennung eines "hängenden" Prozessors im Mobilteil, wobei der Prüfsummen-Teil 22 (Checksumme) zur Fehlererkennung dient. Der Zusatztelegramm-Teil 14 kann vorgesehen sein, um beispielsweise Informationen über den Ladezustand eines Akkus, der Kalibrierung oder als Reserve zu dienen.

Wie bereits eingangs erläutert kann ein in einem Empfänger angeordneter Data-Slicer bzw. ein Komparator durch Häufung von Nullen oder Einsen verstellt werden, wodurch nachfolgende Daten verfälscht werden können. Die Häufung von Nullen und Einsen in einem Datentelegramm sollten daher weitgehend vermieden werden.

Auch wird das Datentelegramm unbrauchbar, wenn beispielsweise ein Bit in dem ID-Teil des Datentelegramms verfälscht ist. Folglich ist eine Redundanz im Datentelegramm nötig, um Auswirkungen von verfälschten Bits zu verringern bzw. zu eliminieren.

Ein verfälschtes Bit in dem IO-Daten-Teil 18 oder in dem Zähler-Teil 20 des Datentelegramms macht dieses unbrauchbar, wenn nur eine Prüfsumme über alles definiert und übertragen würde. Eine Aufteilung des Datentelegramms mit getrennten Prüfsummen für den ID-Teil und den IO-Daten-Teil sowie den Zähler-Teil ist daher vorgesehen.

Gemäß der Erfindung wird vorgeschlagen, den ID-Teil vorzugsweise doppelt zu übertragen.

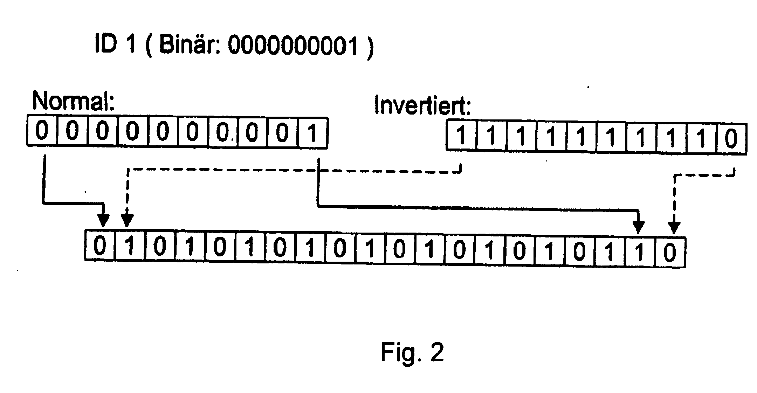

Fig. 2 zeigt ein Beispiel der Übertragung des Binärwertes "0000000001". Dieser wird einmal normal und einmal invertiert gesendet, wobei die Binärwerte nicht nacheinander, sondern abwechselnd je ein Bit des normalen Binärwertes und ein Bit des invertierten Binärwertes übertragen werden. Selbstverständlich besteht auch die Möglichkeit, den Binärwert mehrfach, d. h. vierfach oder sechsfach, nach oben genanntem Prinzip zu übertragen.

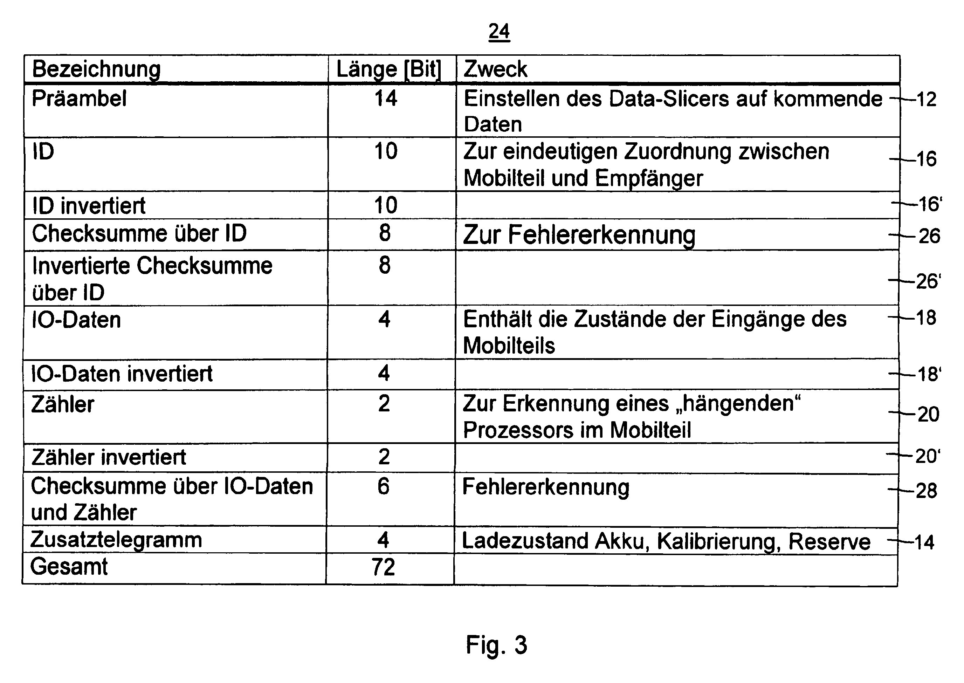

Fig. 3 zeigt einen erfindungsgemäßen Telegrammaufbau 24. Neben der wiederholten Übertragung des ID-Teils 16 erfolgt auch eine separate Übertragung der Prüfsummen-Teile (26, 26', 28) für den ID-Teil und IO-Daten-Teil sowie Zähler-Teil. Der Prüfsummen-Teil 26 des ID-Teils (16) wird zudem als invertierter Prüfsumme-Teil 26' doppelt übertragen, und zwar einmal normal und einmal invertiert nach dem in Fig. 2 dargestellten Prinzip.

Zusätzlich werden der IO-Daten-Teil 18 und der Zähler-Teil 20 doppelt übertragen, d. h. mit einem invertierten IO-Daten-Teil 18' und einem invertierten Zähler-Teil 20'. Die Prüfsumme (28) für den IO-Daten-Teil 18 und den Zähler-Teil 20 wird jedoch nur einfach übertragen, da der nachfolgende Datenteil (Zusatztelegramm) 14 für die Verfügbarkeit nicht relevant ist.

## Patentansprüche

1. Verfahren zur Übertragung von Datentelegrammen (24) über eine Funkstrecke, wobei die Datentelegramme (24) mehrere Telegramm-Teile (12, 16, 18, 20, 22) umfassen, wobei zumindest eines der Telegramm-Teile (16, 18, 20, 22) sowohl nicht-invertiert als auch invertiert gesendet wird,
**dadurch gekennzeichnet,**
**dass** das zumindest eine Telegramm-Teil (16, 18, 20, 22) innerhalb desselben Datentelegramms (24) zumindest zweifach übertragen wird, wobei nach jedem Bit des nicht-invertierten Telegramm-Teils unmittelbar ein invertiertes Bit des invertierten Telegramm-Teils gesendet wird.

2. Verfahren nach Anspruch 1,
**dadurch gekennzeichnet,**
**dass** eine Aufteilung des Datentelegramms (24) in einen ID-Teil (16) und einen Daten-Teil (18) sowie vorzugsweise einen Zähler-Teil (20) mit jeweils getrenntem Prüfsummen-Teil (26, 28) erfolgt.

3. Verfahren nach Anspruch 2,
**dadurch gekennzeichnet,**
**dass** der ID-Teil (16) zumindest zweifach übertragen wird, wobei abwechselnd je ein Bit normal und ein Bit invertiert gesendet wird.

4. Verfahren nach Anspruch 2,
**dadurch gekennzeichnet,**
**dass** der Prüfsummen-Teil (26) des ID-Teils (16) zweifach übertragen wird, wobei abwechselnd je ein Bit normal und darauf folgend ein Bit invertiert gesendet wird.

5. Verfahren nach Anspruch 2,
**dadurch gekennzeichnet,**
**dass** der Daten-Teil (18) sowie der Zähler-Teil (20) zweifach übertragen werden, wobei abwechselnd je 1 Bit normal und darauf folgend 1 Bit invertiert gesendet wird.

6. Verfahren nach Anspruch 2
**dadurch gekennzeichnet,**
**dass** der Prüfsummen-Teile (28) des Daten-Teils (18) und des Zähler-Teil, (20) nur einfach übertragen wird.

7. Verfahren nach zumindest einem der vorhergehenden Ansprüche,
**dadurch gekennzeichnet,**
**dass** die Daten nach dem NRZ-Verfahren codiert werden.

8. Verfahren nach zumindest einem der vorhergehenden Ansprüche,
**dadurch gekennzeichnet,**
**dass** anstelle einer Orientierung auf exakte Positionen im Datentelegramm eine Orientierung an einem dem Empfänger bekannten Bit-Muster der Senderidentifikation und/oder Sender-ID-Prüfsumme erfolgt, wobei nach dem Auffinden eines solchen Bit-Musters ausgehend von diesem relativen Startpunkt eine Bewertung des Gesamttelegramms mit bekannter Länge und mehrfacher Wiederholung durch Verifizierung aller Prüfsummen bezogen auf die jeweiligen Datenabschnitte erfolgt.

9. Verfahren nach Anspruch 8,
**dadurch gekennzeichnet,**
**dass** eine Suche nach möglichen weiteren Vorkommen des Bit-Musters durchgeführt wird, wobei die Daten des Vorkommens mit der höchsten Anzahl korrekter Daten- /Prüfsummen-Pakete weiter verwendet werden.

10. Verfahren nach Anspruch 8,
**dadurch gekennzeichnet,**
**dass** eine Mindestanzahl korrekter Daten-/Prüfsummenpakete vorgegeben wird.

11. Verfahren nach Anspruch 8,
**dadurch gekennzeichnet,**
**dass** im Empfänger eine Prüfsumme der empfangenen Daten gebildet wird, dass die gebildete Prüfsumme mit der übertragenen Prüfsumme verglichen und bei Abweichung in zumindest einem Bit eine Fehlerkorrektur durchgeführt wird.

12. Verfahren nach Anspruch 11,
**dadurch gekennzeichnet,**
**dass** zur Rekonstruktion des abweichende Bits ein Prüfsummen-Algorithmus wie eine Variante des Längs-/Quer-Paritätverfahrens verwendet wird.

## Claims

1. Method for transmission of data telegrams (24) via a radio transmission path, said data telegrams (24) comprising several telegram parts (12, 16, 18, 20, 22), and at least one of the telegram parts (16, 18, 20, 22) being transmitted both non-inverted and inverted,
wherein
the at least one telegram part (16, 18, 20, 22) is transmitted at least twice within the same data telegram (24), where after each bit of the non-inverted telegram part an inverted bit of the inverted telegram part is transmitted.

2. Method according to Claim 1,
wherein
the data telegram (24) is divided into an ID part (16) and a data part (18) and preferably a counter part (20) each with separate check sum part (26, 28).

3. Method according to Claim 2,
wherein
the ID part (16) is transmitted at least twice, where each time one bit is transmitted normally and one bit inverted in alternating manner.

4. Method according to Claim 2,
wherein
the check sum part (26) of the ID part (16) is transmitted twice, where each time one bit is transmitted normally and subsequently one bit inverted in alternating manner.

5. Method according to Claim 2,
wherein
the data part (18) and the counter part (20) are transmitted twice, where each time one bit is transmitted normally and subsequently one bit inverted in alternating manner.

6. Method according to Claim 2,
wherein
the check sum part (28) of the data part (18) and of the counter part (20) is transmitted only once.

7. Method according to at least one of the preceding claims,
wherein
the data are coded in accordance with the NRZ method.

8. Method according to at least one of the preceding claims,
wherein
instead of an orientation to exact positions in the data telegram, an orientation to a bit pattern, known to the receiver, of the transmitter identification and/or transmitter ID check sum takes place, where after the location of such a bit pattern an assessment of the total telegram with known length and multiple repetition is performed starting from this relative starting point by verification of all check sums relative to the respective data sections.

9. Method according to Claim 8,
wherein
a search for possible further occurrence of the bit pattern is performed, where the data of the occurrence with the highest number of correct data/check sum packages continues to be used.

10. Method according to Claim 8,
wherein
a minimum number of correct data/check sum packages is preset.

11. Method according to Claim 8,
wherein
a check sum of the received data is formed in the receiver, wherein the check sum formed is compared with the transmitted check sum, and an error correction is performed in the event of divergence in at least one bit.

12. Method according to Claim 11,
wherein
a check sum algorithm such as a variant lateral/horizontal parity method is used for reconstruction of the divergent bit.

## Revendications

1. Procédé pour transmettre des télégrammes de données (24) par une voie hertzienne, dans lequel les télégrammes de données (24) comprennent plusieurs parties de télégramme (12, 16, 18, 20, 22), sachant qu'au moins l'une des parties de télégramme (16, 18, 20, 22) est émise aussi bien en mode non inversé qu'inversé,
**caractérisé en ce**
**que** ladite partie de télégramme (16, 18, 20, 22) est au moins transmise deux fois au sein du même télégramme de données (24), sachant que directement après chaque bit de la partie de télégramme non inversée est émis un bit inversé de la partie de télégramme inversée.

2. Procédé selon la revendication 1,
**caractérisé en ce**
**qu'**a lieu une subdivision du télégramme de données (24) en une partie ID - identification - (16) et une partie données (18) ainsi que de préférence une partie compteur (20) avec respectivement une partie somme de contrôle (26, 28) distincte.

3. Procédé selon la revendication 2,
**caractérisé en ce**
**que** la partie identification (16) est transmise au moins deux fois, un bit en mode normal et un bit en mode inversé étant émis alternativement.

4. Procédé selon la revendication 2,
**caractérisé en ce**
**que** la partie somme de contrôle (26) de la partie identification (16) est transmise deux fois, un bit en mode normal suivi d'un bit en mode inversé étant émis alternativement.

5. Procédé selon la revendication 2,
**caractérisé en ce**
**que** la partie données (18) ainsi que la partie compteur (20) sont transmises deux fois, un bit en mode normal suivi d'un bit en mode inversé étant émis alternativement.

6. Procédé selon la revendication 2,
**caractérisé en ce**
la partie somme de contrôle (28) de la partie données (18) et de la partie compteur (20) ne sont transmises qu'une seule fois.

7. Procédé selon au moins une des revendications précédentes,
**caractérisé en ce**
les données sont codées selon le procédé NRZ.

8. Procédé selon au moins une des revendications précédentes,
**caractérisé en ce**
**qu'au** lieu d'une orientation sur des positions précises dans le télégramme de données est effectuée une orientation selon une trame de bits connue par le récepteur servant à l'identification de l'émetteur et/ou à la somme de contrôle de l'identification de l'émetteur, sachant qu'après la détection d'une telle trame de bits, en partant de ce point de départ relatif, est effectuée une évaluation du télégramme total avec longueur connue et plusieurs itérations par vérification de toutes les sommes de contrôle rapportées aux sections de données respectives.

9. Procédé selon la revendication 8,
**caractérisé en ce**
**qu'**est effectuée une recherche d'une autre présence possible de la trame de bits, sachant que les données de la présence présentant le nombre le plus élevé de paquets corrects de données / sommes de contrôle sont utilisées ultérieurement.

10. Procédé selon la revendication 8,
**caractérisé en ce**
**qu'**un nombre minimal de paquets corrects de données / sommes de contrôle est consigné.

11. Procédé selon la revendication 8,
**caractérisé en ce**
**que** dans le récepteur est formé une somme de contrôle des données reçues, que la somme de contrôle formée est comparée avec la somme de contrôle transmise et qu'en cas d'erreur dans au moins un bit, est effectuée une correction d'erreur.

12. Procédé selon la revendication 11,
**caractérisé en ce**
**qu'**est utilisé un algorithme de sommes de contrôle tel qu'une variante du procédé contrôle de parité direct/ vertical pour reconstruire le bit divergent.
